# EUROPEAN PATENT APPLICATION

(11) **EP 1 473 470 A1**
(43) Date of publication of application: **03.11.2004**
(21) Application number: 03737497.2
(22) Date of filing: 05.02.2003
(51) Int. Cl.: F16B 19/10

(54) **FASTENER**

(30) Priority: 08.02.2002 JP 2002032154
(71) Applicant: Kabushiki Kaisha Zen Kenchiku Sekkei Jimusho, Tokyo 107-0061 (JP)
(72) Inventor: SATO, Yoshinori, Setagaya-ku, Tokyo 154-0023 (JP)
(74) Representative: Grünecker, Kinkeldey, Stockmair & Schwanhäusser Anwaltssozietät
(86) International application number: PCT/JP2003/001173
(87) International publication number: WO 2003/067101

(57) **Abstract**

A fastener in which a sleeve 3 and a plug 4 are put into concavo-convex engagement both before and after execution to exert an effect of preventing separation between the two and an effect of preventing loosening therebetween after execution and which can be released by a single action during disassembling. Before execution, the sleeve 3 and the plug 4 press fitted therein are positioned by concavo-convex engagement between a fitting protrusion 8 on the inner periphery of an expanding portion 7 and a neck portion 11 of the plug 4. After execution, the fitting protrusion 8 on the inner periphery of the expanding portion 7 as expanded put into concavo-convex engagement with a neck portion 10 of the plug 4 again, thereby exerting an effect of stopping loosening between the two with respect to vibration, etc. During disassembling, a striking force is given to an end of the plug 4 to release the expanded state by a single action, allowing immediate pulling-away of the fastener 1.

## Description

### Technical Field

The present invention relates to an improvement in an industrial fastener referred also to as a resin rivet or a push rivet, and more particularly, to a fastener structure which allows very easy engagement/coupling of two parts in sheet form, for example, irrespective of their material.

### Background Art

Various kinds of products have hitherto been proposed as this type of fastener. However, many are accompanied by difficulty when being removed by releasing their engagement/coupling, even though their. engagement/coupling is possible by, for example, a single push or strike action. While it is, of course, necessary for fasteners to provide high impact and vibration resistances without getting loosened by receiving impact or vibration when they are used for, for example, fixing a circuit board for an electrical appliance, an OA machine or instrument, etc. or attaching an internal decoration material for an automobile, very easy releasing of the engagement/coupling state forms an important factor when recycling specific parts recovered from used products during their disassembly, for example, in terms of a speedup of disassembling job and an improvement in recycling efficiency. The present invention has been made to cope with such requirements.

### Disclosure of the Invention

In order to attain the above object, the present invention provides particularly a fastener structure which allows engagement/coupling by a single push or strike action, and further not only provides high impact and vibration resistances, but also possibility of very easy removal by substantially a single push or strike action when it is removed again after making engagement/coupling once.

The invention as set forth in claim 1 is directed to a fastener made of a resin and comprising a sleeve having at its distal end an expanding portion and at another end a seating flange portion, and a plug inserted in the sleeve and having at its distal end a tapered portion for expanding the expanding portion and at another end a head portion, characterized in that in the unexpanded state of the expanding portion, an inner peripheral surface of the sleeve and an outer peripheral surface of the plug are fit with each other by concavo-convex engagement so as to prevent mutual separation of the sleeve and the plug, whereas the plug has a stop stepped portion engaging with a distal end face of the sleeve when being arranged through the sleeve, thereby providing anti-disengagement between the sleeve and the plug, and that when the expanding portion is expanded by a predetermined amount, while releasing the concavo-convex engagement, in accordance with pressing of the plug to the sleeve after inserting the sleeve into a prepared hole of a counterpart stationary component, the inner peripheral surface of the expanding portion and the outer peripheral surface of the plug are put into concavo-convex engagement again to obtain a restraint feel due to the engagement.

When the counterpart stationary component has a specific thickness, it is desirable in terms of sure achievement of the engagement/coupling, as set forth in claim 2, that the sleeve has a stop stepped portion formed on the outer peripheral surface of the expanding portion and engaging in its expanded state with an opening edge of the prepared hole in a underside of the counterpart stationary component.

When the plug is hollow, as set forth in claim 3, the fastener after being engaged/coupled can be used as a wire path sleeve.

According to the invention as set forth in any of claims 1 to 3, therefore, when the fastener is used for, for example, fixing a circuit board for an electrical appliance or any of various kinds of electronic machines and instruments, or attaching an internal decoration material for an automobile, the sleeve in concavo-convex engagement with the plug is inserted in advance into the prepared hole of the counterpart stationary component, then a single push or strike action is given to the plug to press it into the sleeve. With this, the expanding portion of the sleeve is expanded while releasing the previous concavo-convex engagement, and at the same time, the inner peripheral surface of the expanding portion and the outer peripheral surface of the plug are put into concavo-convex engagement again to make relative positioning. Thus, even when undergoing vibration, etc. after their execution, any loosening is hardly caused between the expanding portion and the plug, allowing the engagement/coupling to be maintained for a long period of time.

The sleeve and plug forming the fastener are in anti-disengagement by not only the concavo-convex engagement, but also the involvement between the stop stepped portion of the plug and the distal end face of the sleeve even when the expanding portion is in the unexpanded state. Thus, the components will not separate from each other, providing excellent handling capability.

On the other hand, owing to high self-restorability as a characteristic of a resin-made fastener, in order to release the fastener from the engagement/coupling state at the time of repairing or recycling, the plug is pressed therein by a push action or a striking force in the opposite direction to that upon expansion, achieving releasing of the expansion of the sleeve, allowing easy pulling-away of the fastener itself. In this case as well, owing to the above anti-disengagement effect, without the sleeve and plug from being separated from each other, the fastener can be pulled away from the counterpart stationary component with the sleeve and plug as a unit.

That is, according to the invention as set forth in any of claims 1 to 3, upon expansion of the expanding portion, a restraint feel is obtained due to concavo-convex engagement between the sleeve and the plug. Thus, it provides not only excellent vibration and impact resistances without producing loosening between the two after execution, but also possible cancellation of dispersion of the condition of execution resulting from individual difference. Moreover, owing to self-restorability of the resin itself, releasing of the engagement/fixing state is very easy to carry out.

Moreover, since releasing of the engagement/fixing state is made by a single push or strike action of the plug, a speedup of the work can be achieved, thereby obtaining a drastic improvement in efficiency of disassembling the counterpart component and recovering specific parts therefrom for recycling purposes. And, since the sleeve and plug are in anti-disengagement and are not separated from each other, the handling capability is improved as well. Particularly, since the stop stepped portion performing anti-disengagement of the plug from the sleeve protrudes from the sleeve, releasing operation of the engagement/fixing state can easily be carried out by merely giving a striking force to that portion, providing excellent handling capability.

The invention as set forth in claim 4 is directed to a fastener comprising a sleeve having an expanding portion, a plug inserted in the sleeve and having a tapered portion for expanding the expanding portion, and a screw member screwed in the plug, wherein at least the sleeve and the plug are formed of a resin, characterized in that the plug also has an expanding portion, that, in the unexpanded state of the expanding portion, an inner peripheral surface of the sleeve and an outer peripheral surface of the plug are fit with each other by concavo-convex engagement so as to prevent mutual separation of the sleeve and the plug, that when the expanding portion is expanded by a predetermined amount, while releasing the concavo-convex engagement, in accordance with pressing of the plug to the sleeve after inserting the sleeve into a prepared hole of a counterpart stationary component, the inner peripheral surface of the expanding portion and the outer peripheral surface of the plug are put into concavo-convex engagement again to obtain a restraint feel due to the engagement, and that when screwing the screw member into the plug, the expanding portion of the plug expands with the expanding portion of the sleeve while maintaining the concavo-convex engagement.

In this case, as set forth in claim 5, it is preferable, in terms of possibility of a single push or strike action at the time of removal, that when the expanding portion of the sleeve is expanded by a predetermined amount, while releasing the concavo-convex engagement, in accordance with pressing of the plug to the sleeve, a distal end of the expanding portion of the plug protrudes from a distal end of the expanding portion of the sleeve.

Therefore, the invention as set forth in claim 4 or 5 is basically identical to that as set forth in claim 1 in relative positional relationship between the sleeve and the plug which constitute fastener, wherein by expanding the sleeve by push action of the plug, the sleeve, together with the plug, is fixed as an anchor member to its counterpart component. Then, while being inserted into another component to be engaged/fixed to the counterpart component, the screw member is screwed into the plug, thereby achieving engagement/fixing of the two components together.

That is, according to the invention as set forth in claim 4 or 5, the component elements of the sleeve and plug as well as the screw member having the two as an anchor member are used, wherein the relationship between the sleeve and the plug is basically identical to that described in claim 1. Thus, it provides not only excellent impact and vibration resistances, but also the advantage that releasing of the engagement/coupling state can also be made by a single action on the precondition that the screw member is pulled away first.

The invention as set forth in claim 6 is directed to a resin fastener comprising a plurality of fastener elements each having an expanding anchor portion and a head portion formed integrally with each other and a plug disposed in the middle of an arrangement of the fastener elements and having at its distal end a tapered portion for expanding the expanding anchor portions, wherein the fastener elements and the plug are formed integrally with each other to provide their continuous connection at another end of the plug, characterized in that in the state that the expanding anchor portions are contracted and inserted together with the plug into a prepared hole of a counterpart stationary component, an inner peripheral surface of each expanding anchor portion and an outer peripheral surface of the plug are fit with each other by concavo-convex engagement, and that when the expanding anchor portions are expanded by a predetermined amount, while releasing the concavo-convex engagement, in accordance with pressing of the plug to the expanding anchor portions, inner peripheral surfaces of the expanding anchor portions and an outer peripheral surface of the plug are put into concavo-convex engagement again, preventing any relative movement between the two and obtaining a restraint feel due to the concavo-convex engagement.

In this case, when the counterpart component has a specific thickness, it is desirable, as set forth in claim 7, that each expanding anchor portion has a stop stepped portion formed at its distal end and engaging in its expanded state with an opening edge of the prepared hole in a underside of a counterpart stationary component.

On the other hand, when the counterpart component has a unspecific thickness, it is desirable, as set forth in claim 8, that each expanding anchor portion has a plurality of latch pawls formed along the axial direction of the prepared hole, wherein, in the expanded state of the expanding anchor portion, one of the latch pawls of each expanding anchor portion engages with an opening edge of the prepared hole in a underside of a counterpart stationary component.

Moreover, for the same reason as that described in connection with claim 5, it is desirable, as set forth in claim 9, that when the inner peripheral surfaces of the expanding anchor portions and the outer peripheral surface of the plug are put into concavo-convex engagement again in accordance with expansion of the expanding anchor portions, a distal end of the plug protrudes from distal ends of the expanding anchor portions

Moreover, for achieving a reduction in size of the fastener and a space saving, it is desirable, as set forth in claim 10, the fastener elements of small width are disposed to be opposite to each other across the plug when viewed in top plan.

Additionally, when serving the fastener itself as an anchor portion for a binding belt for various kinds of wires, for example, the binding belt may be formed integrally with another end of the plug as set forth in claim 11.

Therefore, according to the invention as set forth in any of claims 6 to 9, while having basically the same function as that described in claim 1, the most important feature lies in that the fastener elements and plug are integrally formed in advance to provide an inseparable unitary relationship, resulting in a drastic improvement in handling capability thereof.

That is, according to the invention as set forth in any of claims 6 to 8, since the fastener elements and plug having basically the same function as those described in claim 1 are integrally formed in advance, providing excellent impact and vibration resistances and possible releasing of the engagement/fixing state by a single action. Moreover, the fastener elements and plug will not separate from each other under any condition, having the advantage of excellent handling capability. Particularly, when the plug protrudes from the expanding anchor portions in the expanded state of the expanding anchor portion as set forth in claim 9, the operability is further improved when releasing operation of the engagement/fixing state by a single action.

The invention as set forth in claim 10 or 11 aims to achieve substantially flattening of the fastener elements, thus having the advantage of not only providing excellent impact and vibration resistances and possible releasing of the engagement/fixing state by a single action, but also possibility of achieving, particularly, a reduction in size and a space saving.

### Brief Description of the Drawings

FIG. 1 is a view showing a first mode for carrying out the present invention, in which (A) is a top plan view of a fastener, (B) is a front elevational view of the fastener and (C) is a bottom plan view of the fastener.
FIG. 2 is a sectional view explaining the fastener shown at (B) in FIG. 1.
FIG. 3 is a sectional view explaining the engagement/fixing state made by the fastener of FIG. 2.
FIG. 4 is a sectional view explaining the engagement/fixing state made by a fastener as a second mode for carrying out the present invention.
FIG. 5 is a sectional view explaining the states before and after engagement made by a fastener as a third mode for carrying out the present invention.
FIG. 6 is a sectional view explaining the states before and after engagement made by a fastener as a fourth mode for carrying out the present invention.
FIG. 7 is a sectional view explaining the engagement/fixing made by a fastener as a fifth mode for carrying out the present invention.
FIG. 8 is a view explaining the relationship between a sleeve and a plug in FIG. 7.
FIG. 9 is a view showing details of the sleeve in FIG: 8, in which (A) is a top plan view thereof, (B) is a front elevational view thereof and (C) is a bottom plan view thereof.
FIG. 10 is a view showing details of the plug in FIG. 8, in which (A) is a top plan view thereof, (B) is a front elevational view thereof and (C) is a bottom plan view thereof.
FIG. 11 is a sectional view explaining the state of the sleeve inserted in a counterpart stationary component.
FIG. 12 is a sectional view explaining the engagement/coupling state made by the expansion of the sleeve.
FIG. 13 is a view showing a sixth mode for carrying out the present invention, in which (A) is a top plan view of a fastener, (B) is a front elevational view thereof and (C) is a bottom plan view thereof.
FIG. 14 is a right side elevational view of (B) in FIG. 13.
FIG. 15 is a sectional view taken along the line d-d of (B) in FIG. 13.
FIG. 16 is a sectional view taken along the line e-e of FIG. 14.
FIG. 17 is a sectional view taken along the line f-f of FIG. 16.
FIG. 18 is a sectional view explaining the state of an initial stage of insertion of the fastener of FIG. 13.
FIG. 19 is a sectional view explaining the state of an intermediate stage of insertion of the fastener of FIG. 13.
FIG. 20 is a sectional view explaining the state of another intermediate stage of insertion of the fastener of FIG. 13.
FIG. 21 is a view showing the state of completion of engagement of the fastener of FIG. 13, in which (A) is a top plan view thereof, (B) is an explanatory sectional view thereof and (C) is a bottom plan view thereof.
FIG. 22 is a sectional view explaining the state of an initial stage of insertion of a fastener as a seventh mode for carrying out the present invention.
FIG. 23 is a sectional view explaining the state of completion of engagement of the fastener of FIG. 22.
FIG. 24 is a developed view explaining a binding belt integrated with a fastener as an eighth mode for carrying out the present invention.
FIG. 25 is a view explaining the service state of the fastener of FIG. 24.

### Best Mode for Carrying Out the Invention

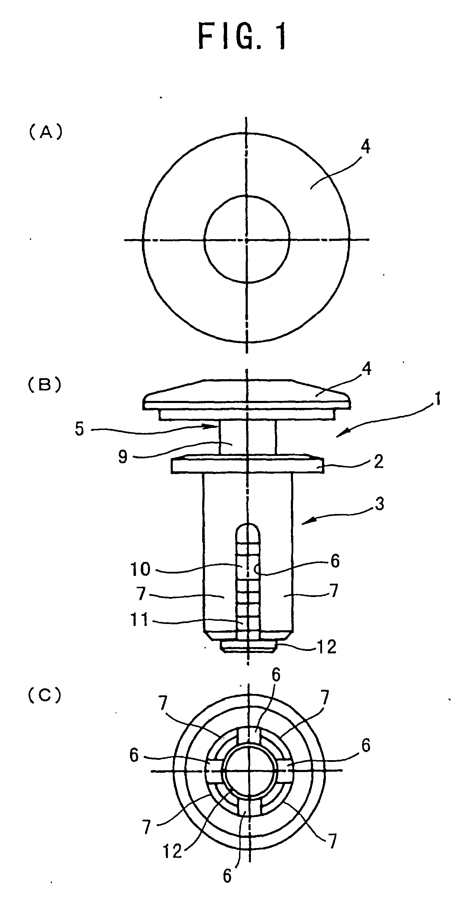

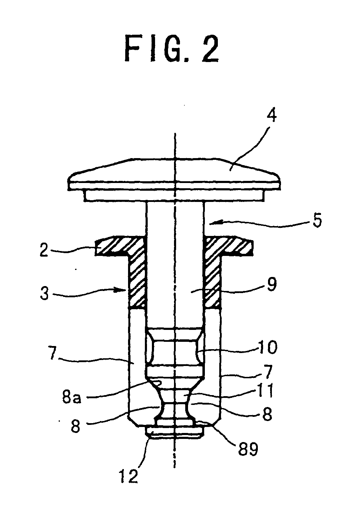

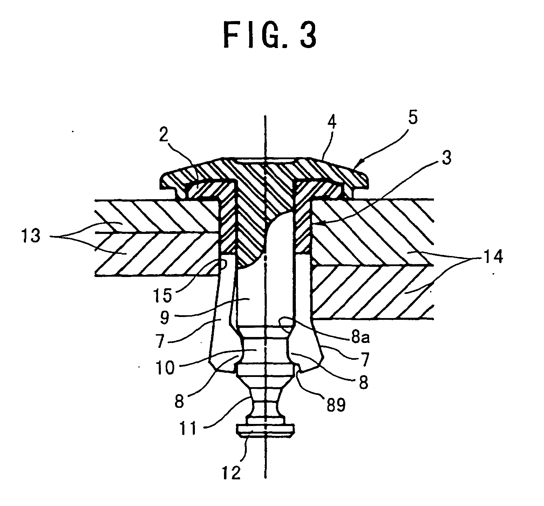

FIGS. 1 to 3 are views showing a preferred form of a fastener according to the present invention, in which (A), (B) and (C) of FIG. 1 are top plan, front elevational and bottom plan views, respectively, of the fastener in the single unit sate, FIG. 2 is an overall sectional view of the sleeve shown at (B) in FIG. 1 and FIG. 3 is an overall sectional view of the fastener in its fastening state. Note that FIG. 3 is a synthesized view showing the right and left half portions in different states, wherein the right half portion shows a case when counterpart components to be fastened together have a large thickness, whereas the left half portion shows a case when counterpart components to be fastened together have a small thickness.

The fastener 1 is formed by a hollow cylindrical sleeve 3 having a circular seating flange portion 2 and a plug 5 press fitted in the sleeve 3 and having a circular head portion 4 and shaped substantially like a stepped shank or mushroom, as shown in FIG. 1. The two are both formed from a thermoplastic resin, such as nylon.

The sleeve 3 is divided like a collet toward its distal end with four radial slots 6 having about a half of its length, thereby defining a radially expansible expanding portion 7. The inner peripheral surface of the sleeve 3 in its upper portion is a simple cylindrical surface, whereas the inner peripheral surface of the expanding portion 7 in its distal end portion is shaped like a tapered hole having a gradually decreasing diameter toward its distal end via a tapered surface 8a connecting with its general inner peripheral surface and an arcuate surface connecting therewith, as shown, and having a smoothly and gradually increasing diameter from its minimum diameter portion to its distal end, thereby defining substantially an annular protrusion 8, as shown in FIGS. 2 and 3. A stepped recess 89 is formed at the distal end of the expanding portion 7.

On the other hand, the plug 5 has a shank 9 having a length larger than the entire length of the sleeve 3 and the shank 9 has two vertically spaced apart neck portions 10 and 11 formed like annular grooves on its distal end portion. As is obvious from FIG. 2, the lower neck portion 11 is complementary in shape to the annular protrusion 8 on the inner periphery of the expanding portion 7 yet to be expanded, and as is obvious from FIG. 3, the upper neck portion 10 is complementary in shape to the annular protrusion 8 on the inner periphery of the expanding portion 7 as expanded.

Moreover, a flange portion 12 is formed at the distal end of the shank 9 as a stop stepped portion having a larger diameter than the stepped recess 89 on the sleeve 3 and engages the distal end face of the expanding portion 7 of the sleeve 3 beyond the stepped recess 89 when the expanding portion 7 is yet to be expanded. When the plug 5 is combined with the sleeve 3 by press fitting, the flange portion 12 at the end of the shank 9 of the plug 5 projects beyond the annular protrusion 8 of the sleeve 3 side and the annular protrusion 8 makes concavo-convex engagement with the neck portion 11 of the plug 5, while the flange portion 12 engages the distal end face of the expanding portion 7, as shown in FIG. 2, whereby the detachment of the plug 5 from the sleeve 3 can be prevented effectively, so that no separation of the sleeve 3 and plug 5 from each other may occur when the fastener 1 remains as a unit yet to be applied.

Referring to a method of applying the fastener 1 constructed as described, the sleeve 3 of the fastener 1 is inserted through a hole 15 formed in counterpart components 13 or 14 to be fastened together and fixed until the expanding portion 7 of the sleeve 3 may protrude by a predetermined amount from the rear surface of the counterpart stationary components 13 or 14 and the seating flange portion 2 of the sleeve 3 rests on the counterpart stationary components 13 or 14, and the plug 5 is pressed or hit in through the sleeve 3 until the distal end portion of the plug 5 protrudes from the end of the expanding portion 7 of the sleeve 3 so that the seating flange portion 2 of the sleeve 3 and the head portion 4 of the plug 5 side may lie on each other, as shown in FIG. 3.

As the plug 5 is hit in, the expanding portion 7 is expanded gradually from below like a skirt, while the concavo-convex engagement between the neck portion 11 of the plug 5 and the annular protrusion 8 of the sleeve 3 is released, as shown in FIG. 3. Upon expansion of the expanding portion 7, the annular protrusion 8 makes concavo-convex engagement with the upper neck portion 10 of the plug 5 and a restraint feel of their concavo-convex engagement is obtained to confirm the expansion of the expanding portion 7 to a predetermined extent, whereby the counterpart component 13 or 14 is compressed between the expanding portion 7 and the seating flange portion 2 of the sleeve 3 or the head portion 4 of the plug 5 and are thereby fastened and fixed rigidly. This is irrespective of the thickness of the counterpart stationary components 13 or 14, as shown in FIG. 3. At the same time, the effect of preventing loosening between the sleeve 3 and the plug 5 as applied (after expansion) is exhibited to provide satisfactory resistance to impact, vibration, etc., since the concavo-convex engagement between the sleeve 3 and the plug 5 as described makes their positioning relative to each other.

When, on the other hand, it is desirable to release the engagement/coupling by the fastener 1 after its execution, a striking force is, for example, given to the flange portion 12 of the plug 5 to hit the plug 5 in the opposite direction to that of its execution and thereby release the expanding portion 7 from expansion and the plug 5, as well as the sleeve 3, is pulled out from the hole 15. When the flange portion 12 of the plug 5 has contacted the distal end face of the expanding portion 7 (as shown in FIG. 2), their relative movement is prevented and the sleeve 3 and the plug 5 can be pulled out from the hole 15 as a unitary assembly without being separated from each other.

It is an advantage of the fastener 1 according to the embodiment under description that its disassembling in the opposite order to that of its execution can be performed quickly substantially by a single action, and when it is used for, for example, fixing a circuit board for an electrical product, etc., or attaching an internal decoration material for an automobile, it greatly facilitates any job of recovering a specific part from a used product for recycling purposes after its dismantling.

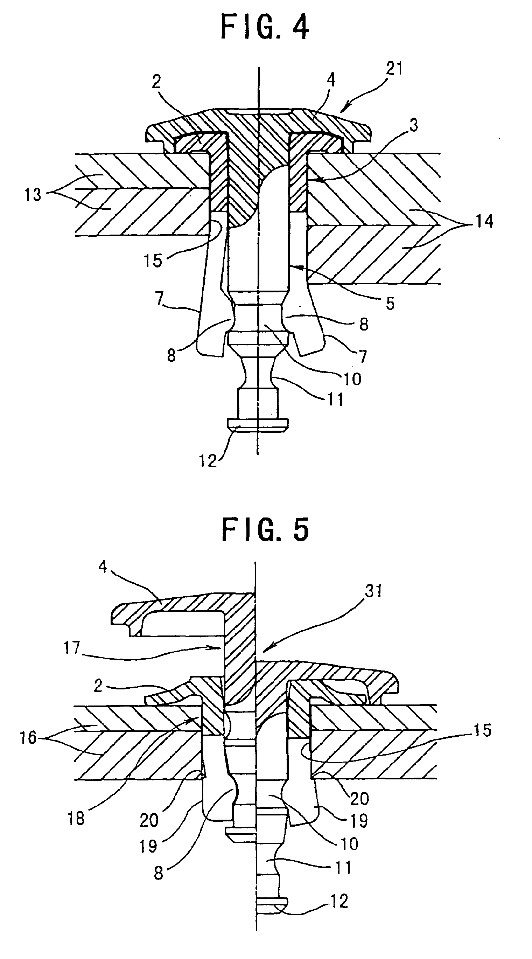

FIGS. 4 to 6 show second to fourth embodiments of the present invention, and give common reference numerals to the parts which they share with the first embodiment.

According to the second embodiment shown in FIG. 4, a plug 5 adapted to form a fastener 21 with a sleeve 3 has a greater length from its lower neck portion 11 to its flange portion 12 as a stop stepped portion.

According to the third embodiment shown in FIG. 5, a sleeve 18 adapted to form a fastener 31 with a plug 17 has a stop stepped portion 20 formed on the outer peripheral surface of its expanding portion 19 and engaging the edge of a hole 15 opening on the rear side of counterpart stationary components 16, when the expanding portion is expanded, provided, however, that the counterpart components 16 to be fastened together and fixed have a specific total thickness. In any other aspect of construction, it is basically identical to what is shown in FIGS. 2 and 3. This embodiment has the advantage that the tightening force of the fastener 31 itself makes a more reliable fastening together of the counterpart stationary components 16.

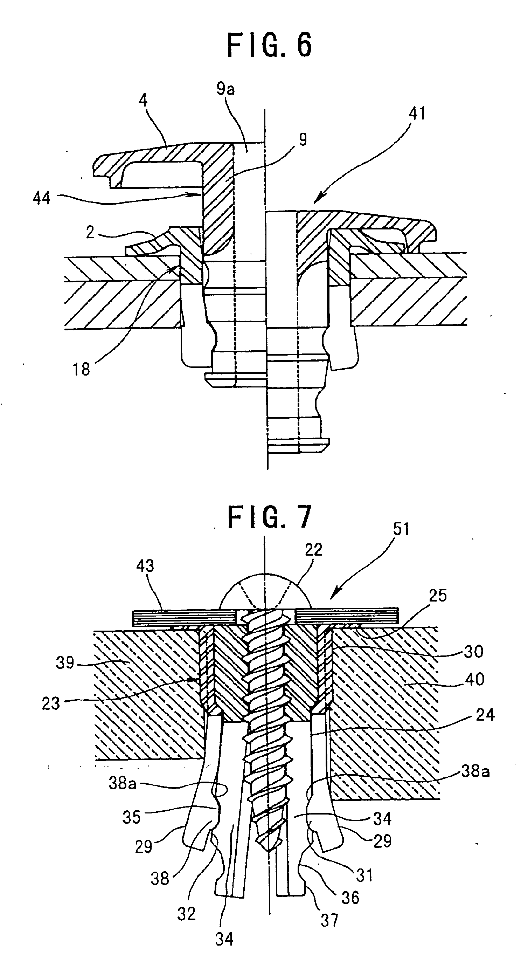

The fourth embodiment shown in FIG. 6 is based on the third embodiment shown in FIG. 5, and has the advantage of serving also as a so-called wire path sleeve, since a plug 44 adapted to form a fastener 41 with a sleeve 18 has a hollow shank 9 defining an inner cylindrical portion 9a through which various kinds of wires can, for example, be passed.

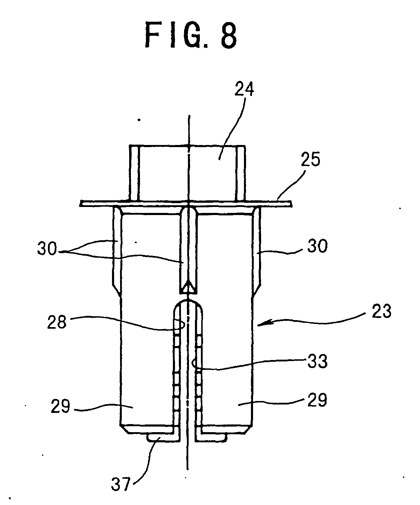

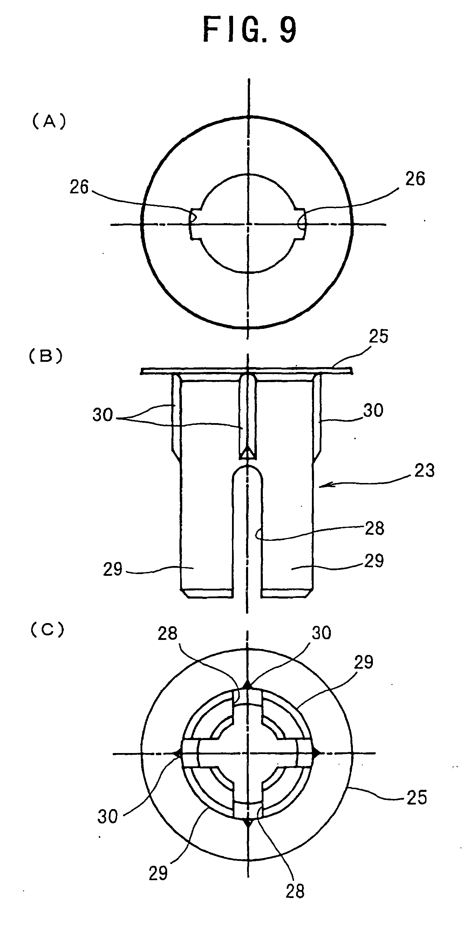

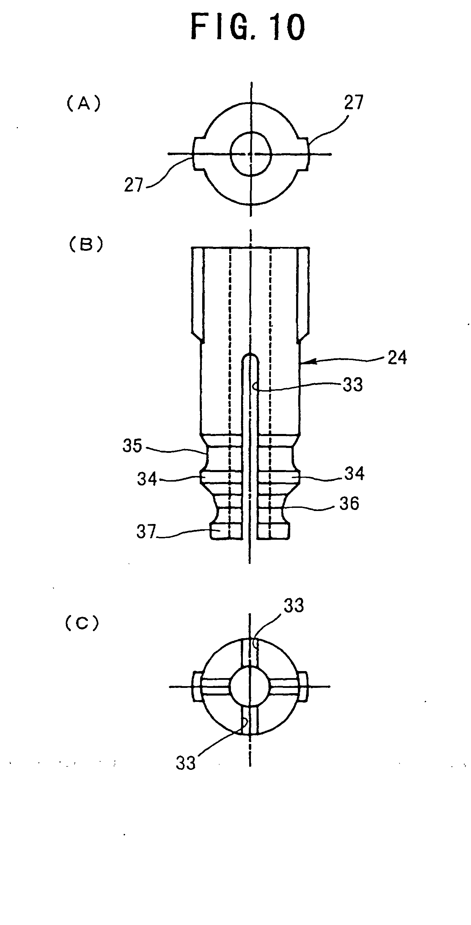

FIGS. 7 to 12 show a fifth embodiment of the present invention and illustrate a type including a screw member 22, while a fastener 51 itself is used as an anchor portion, as shown in FIG. 7. FIG. 8 is an exploded view showing the mutual relationship between the structural elements and FIGS. 9 and 10 show details of a sleeve 23 and a plug 24 alone, respectively. FIGS. 7, 11 and 12 are, however, each a combination of views showing different states in their right and left half portions, and their right half portions show the case in which the counterpart components to be fastened together have a large thickness, while their left half portions show the case in which the counterpart components to be fastened together have a small thickness.

As shown in FIGS. 7 to 10, the fastener 51 is formed by a hollow cylindrical sleeve 23 having a thin seating flange portion 25, a plug 24 in the form of a hollow stepped shank press fitted in the sleeve 23 and a screw 22 as a screw member adapted to be screwed into the plug 24, the sleeve 23 and the plug 24 being both formed from a thermoplastic resin, such as nylon. The sleeve 23 has a pair of index grooves 26 formed on the inner periphery of its top, while the plug 24 has protrusions 27 formed on its outer periphery and complementary to the index grooves 26, respectively, so that the mutual fitting of the index grooves 26 and the protrusions 27 may provide a stop for preventing rotation between the sleeve 23 and the plug 24.

As shown in FIG. 7 and also in FIG. 9, the sleeve 23 is divided like a collet toward its distal end by four radial slots 28 defining an expanding sleeve portion 29 which is radially expansible, and a rib 30 protrudes above each slot 28. As shown also in FIG. 7, the inner peripheral surface of the expanding sleeve portion 29 in its distal end portion is shaped like a tapered hole having a gradually decreasing diameter toward its distal end via a tapered surface 38a and an arcuate surface connecting therewith, and having a smoothly and gradually increasing diameter from its minimum diameter portion to its distal end, thereby substantially defining an annular protrusion 38. A stepped recess 32 is formed at the distal end of the expanding sleeve portion 29.

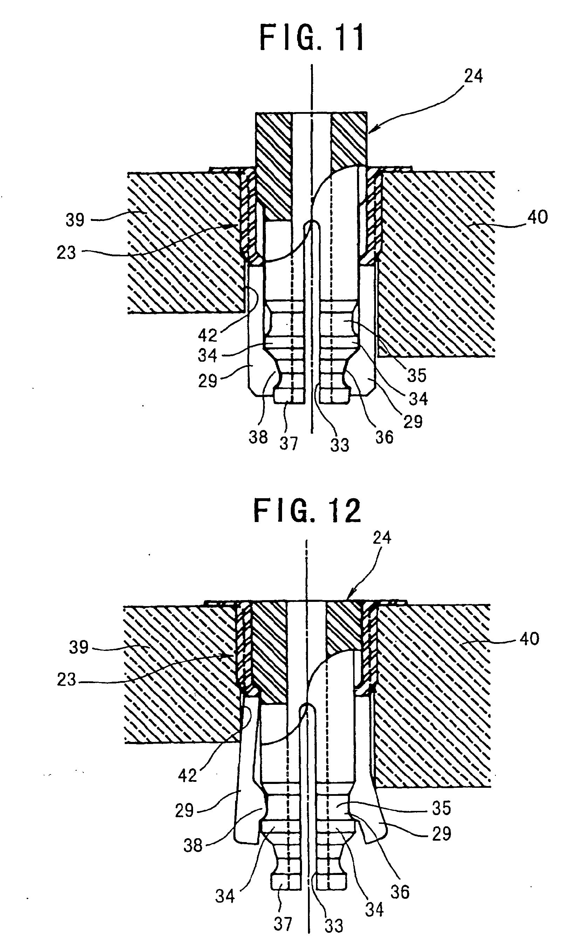

On the other hand, the plug 24 has a length larger than the sleeve 23, and its distal end portion is divided like a collet by four radial slots 33 defining an expanding plug portion 34 which is radially expansible, as shown in FIG. 10, like the sleeve 23. The plug 24 has two vertically spaced apart neck portions 35 and 36 formed like annular grooves on its distal end portion. As is obvious from FIG. 11, the lower neck portion 36 is complementary in shape to the annular protrusion 38 on the inner periphery of the expanding sleeve portion 29 yet to be expanded, and as is obvious from FIG. 12, the upper neck portion 35 is complementary in shape to the annular protrusion 38 on the inner periphery of the expanding sleeve portion 29 as expanded.

Moreover, a large diameter flange portion 37 is formed at the distal end of the plug 24 as a stop stepped portion complementary to the stepped recess 32 on the sleeve 23 and engages complementarily with the stepped recess 32, while the plug 24 has a distal end face projecting slightly from the sleeve 23, when the expanding sleeve portion 29 is yet to be expanded. When the plug 24 is combined with the sleeve 23 by press fitting, the flange portion 37 at the end of the plug 24 engages complementarily with the stepped recess 32 on the sleeve 23, while the annular protrusion 38 on the sleeve 23 makes concavo-convex engagement with the neck portion 36 of the plug 24, as shown in FIGS. 8 and 11, whereby the detachment of the plug 24 from the sleeve 23 can be prevented effectively, so that no separation of the sleeve 23 and plug 24 from each other may occur when the fastener 51 remains as a unit yet to be applied.

Referring to a method of applying the fastener 51 constructed as described, the sleeve 23 combined with the plug 24 (as shown in FIG. 8) is inserted through a hole 42 formed in a counterpart stationary component 39 or 40, so that the expanding sleeve portion 29 may protrude by a predetermined amount from the rear surface of the counterpart component 39 or 40 be fixed, while the seating flange portion 25 of the sleeve 23 rests on the counterpart stationary component 39 or 40, as shown in FIG. 11. At this time, the ribs 30 formed on the sleeve 23 are deformed to make pressure contact with the inner peripheral surface of the hole 42, whereby the detachment of the sleeve 23 from the counterpart component 39 or 40 can be prevented even if the sleeve 23 may, for example, be inserted in an upwardly directed position.

Under these circumstances, a striking or pushing force is given to the top surface of the plug 24 to force the plug 24 through the sleeve 23 until the distal end portion of the plug 24 protrudes to a large extent from the end of the expanding sleeve portion 29, so that the top surface of the plug 24 may become flush with the seating flange portion 25 of the sleeve 23.

As the plug 24 is hit in, the expanding sleeve portion 29 is expanded gradually from below like a skirt, while the concavo-convex engagement between the neck portion 36 of the plug 24 and the annular protrusion 38 of the sleeve 23 is released, as shown in FIG. 12. Upon expansion of the expanding sleeve portion 29, the annular protrusion 38 makes concavo-convex engagement with the upper neck portion 35 of the plug 24 and a restraint feel of their concavo-convex engagement is obtained to confirm the expansion of the expanding sleeve portion 29 to a predetermined extent, whereby the sleeve 23 and the plug 24 are fixed like an anchor portion to the counterpart stationary component 39 or 40. This is irrespective of the thickness of the counterpart stationary component 39 or 40, as shown in FIG. 11. At the same time, the effect of preventing loosening between the sleeve 23 and the plug 24 as applied (after expansion) is exhibited to provide satisfactory resistance to impact, vibration, etc., since the concavo-convex engagement between the sleeve 23 and the plug 24 as described makes their positioning relative to each other.

Then, the screw 22 is passed through another part 43 to be fastened and fixed to the counterpart stationary component 39 or 40 and is tightened through the plug 24, as shown in FIG. 7. As the screw 22 is tightened, the expanding plug portion 34 is expanded outwardly like the sleeve 23 expanded before and thereby causes the already expanded expanding sleeve portion 29 to be further expanded. As a result, the stationary component 43 is screwed down to the counterpart stationary component 39 or 40, while the sleeve 23 and the plug 24 are fixed still more rigidly to the counterpart stationary component 30 or 40.

This mode for fixing is applicable not only to the case in which the counterpart stationary component 39 or 40 is a concrete block, but also to the case in which it is a plaster board, fancy plywood, an ALC panel, a veneer, or the like making a hollow wall, and it is, moreover, applicable even if the hole 42 may be a non-through hole.

When, on the other hand, it is desirable to release the engagement/coupling by the fastener 51 after its execution, the screw 22 is removed as shown in FIG. 12. Then, a striking force is, for example, given to the distal end face of the flange portion 37 of the plug 24 to hit the plug 24 in the opposite direction to that of its execution and thereby release the expanding sleeve portion 29 from expansion and the plug 24, as well as the sleeve 23, is pulled out from the hole 142. When the flange portion 37 of the plug 24 has complementarily engaged with the stop recess 32 of the sleeve 23, their relative movement is prevented and the sleeve 23 and the plug 24 can be pulled out from the hole 42 as a unitary assembly without being separated from each other as shown in FIG. 11.

Thus, this embodiment also enables its disassembling in the opposite order to that of its execution to be performed quickly substantially by a single action.

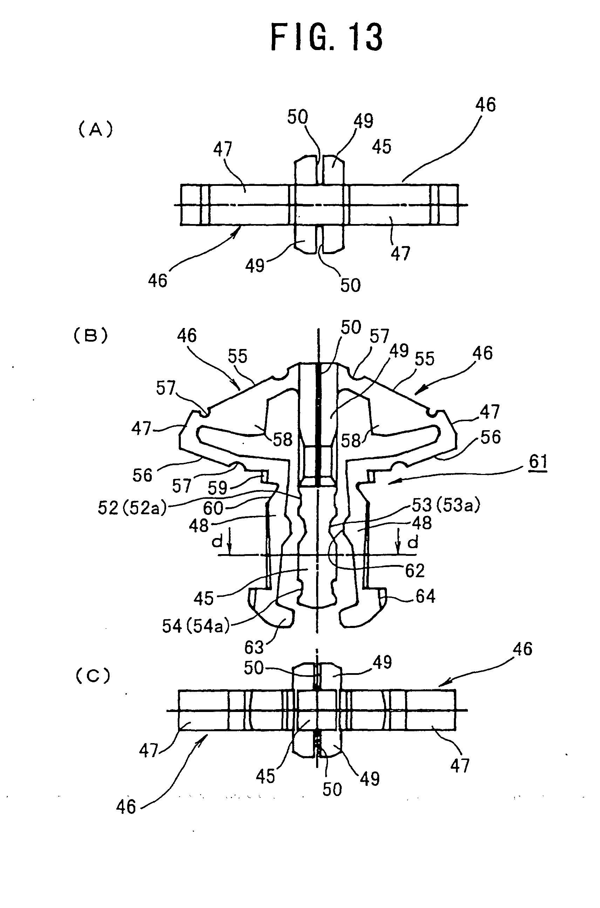

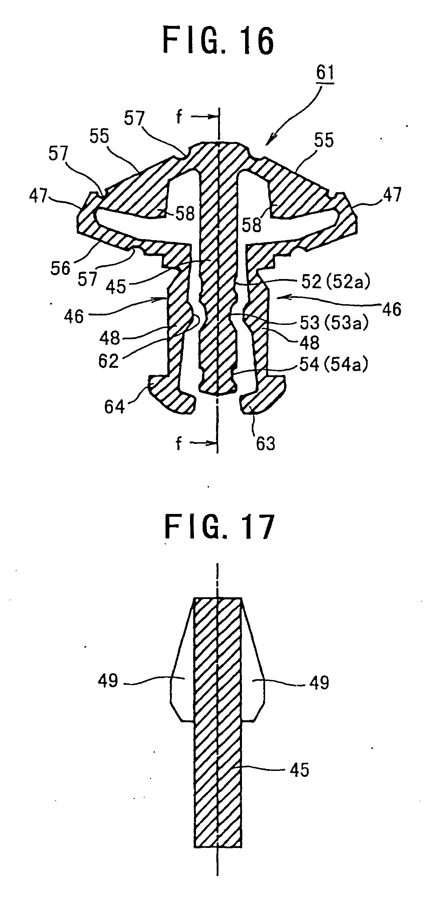

FIGS. 13 to 21 show a sixth embodiment of the present invention and it differs from the embodiments described above in that the portion corresponding to the sleeve and the portion corresponding to the plug are formed integrally with each other substantially as a one-piece structure.

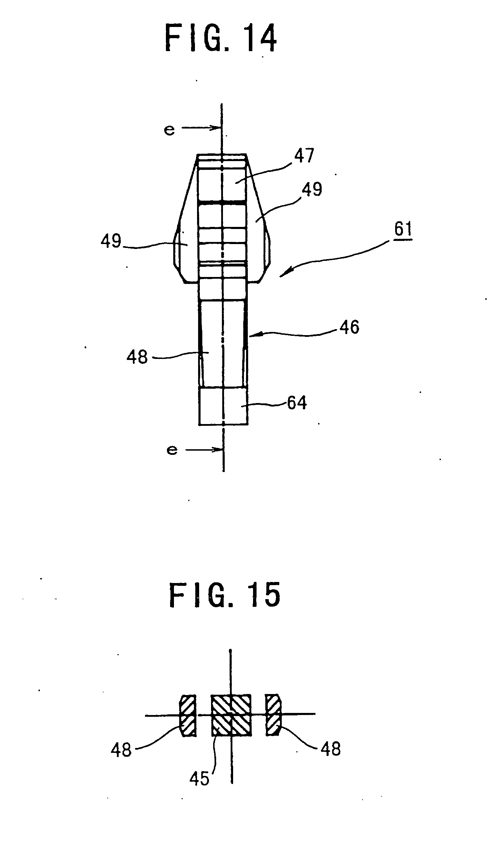

As shown in FIG. 13 and also in FIGS. 14 to 17, a fastener 61 having substantially a flattened shape as viewed in top plan is composed of a plug 45 shaped like a square column and a pair of fastener elements 46 arranged on the opposite sides of the plug 45 and those elements are formed from a thermoplastic resin, such as nylon, integrally with one another. Each fastener element 46 has a head portion 47 extending outwardly approximately in the shape of a hairpin and an expanding anchor portion 48 which is integral therewith, and each fastener element 46 has its head portion 47 joined at its top to the upper end of the plug 45 by an integral molding method and is supported on the plug 45 substantially in a cantilever fashion.

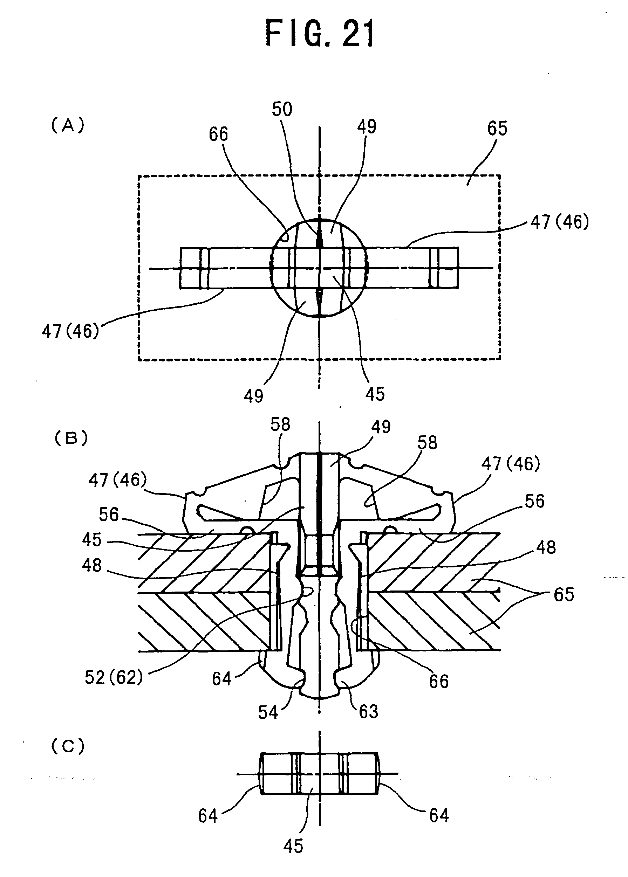

In the upper half portion of the plug 45 shaped like a square column, a wedge-like protrusion 49 having a thickness which gradually increases downwardly is formed with the same width as the plug 45 on each of two opposite sides which are perpendicular to the direction in which the fastener elements 46 face each other. A slot 50 is formed in each wedge-like protrusion 49 to impart to the wedge-like protrusion 49 flexibility in the direction in which the width of the slot 50 is reduced or enlarged, while each wedge-like protrusion 49 has a maximum diameter portion contacting the inner wall of a hole 66 formed in counterpart stationary components 65 (see FIG. 21). In the lower half portion of the plug 45 shaped like a square column, three tapered or arcuate grooves 52a, 53a and 54a are formed on each of the remaining sides to be opposite each other, thereby forming three vertically spaced apart neck portions 52, 53 and 54 on the plug 45.

On the other hand, several notches 57 are formed in a shoulder portion 55 on the upper side of the head portion 47 forming each fastener element 46 and approximately in the shape of a hairpin and in a rest wall portion 56 on its lower side to impart flexibility to the head portion 47, while a shoulder protrusion 58 is formed on the inner peripheral surface of the shoulder portion 55. An under-neck protrusion 59 and a notch 60 are formed at the base of the expanding anchor portion 48 of each fastener element 46, while a fitting protrusion 62 is formed on the inner surface of the expanding anchor portion 48, and the whole inner surface of the expanding anchor portion 48 is so shaped as to be able to make thoroughly intimate contact with the plug 45, as will be described. At the same time, the fitting protrusion 62 is so shaped as to be able to fit in both of the two neck portions 52 and 53 of the plug 45. The notch 60 formed at the base of the expanding anchor portion 48 as stated makes the expanding anchor portion 48 elastically deformable at its base, while the under-neck protrusion 59 is situated at an angle of 90 degrees from each wedge-like protrusion 49 of the plug 45, so that it, as well as the wedge- like protrusion 49, may contact the inner wall surface of the hole 66.

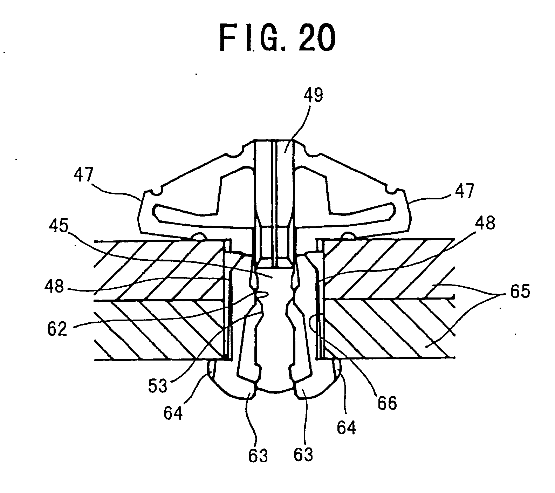

Moreover, each expanding anchor portion 48 protrudes both inwardly and outwardly at its distal end, whereby a fitting protrusion 63 and a hook portion 64 as a stop stepped portion are formed respectively. The fitting protrusion 63 is so shaped as to be able to fit in the lowermost neck portion 54 of the plug 45 and the hook portion 64 is spaced apart from the under-neck surface of the head portion 47 by a distance which is equal to the thickness of the counterpart stationary components 65, as shown in FIG. 20.

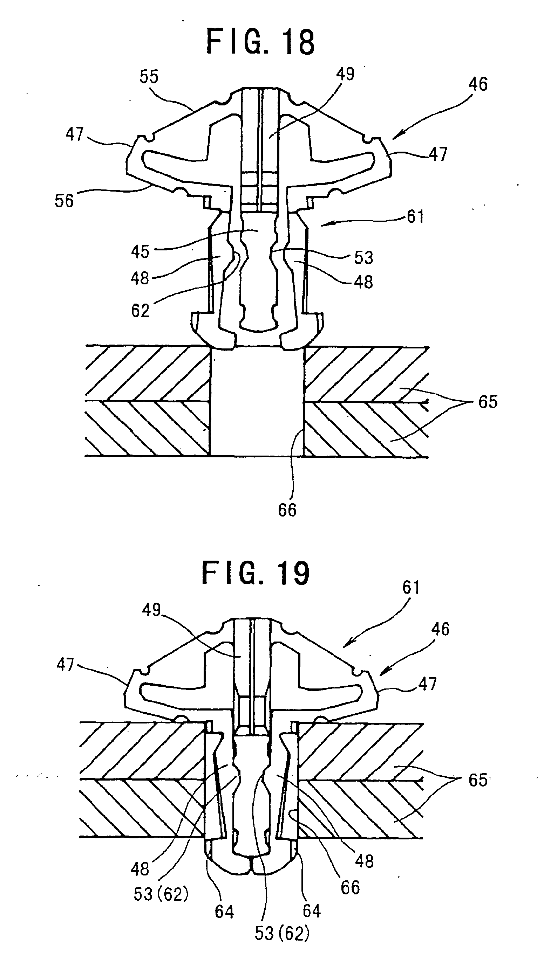

Referring to a method of applying the fastener 61, the expanding anchor portions 48 of the fastener 61 are held at their distal ends against the open edge of the hole 66 formed in the counterpart stationary components 65 to be fastened together and fixed, are contracted into intimate contact with the plug 45 and are forced into the hole 66 to bring the under-neck surfaces of the head portions 47 into intimate contact with the counterpart components 65 to be fixed, as shown in FIGS. 18 and 19. As is obvious from FIG. 21 (A), it follows that the wedge-like protrusions 49 and the under-neck protrusions 59 are flexibly deformed in contact with the inner wall surface of the hole 66. At the same time, as the plug 45 and the expanding anchor portions 48 are in intimate contact with each other, the fitting protrusions 62 of the expanding anchor portions 48 fit intimately in the neck portions 53 of the plug 45. The hook portions at the ends of the expanding anchor portions 48 define therebetween a maximum diameter which enable them to enter in the hole 66.

Then, a striking force is, for example, applied to the top of the plug 45 in the state shown in FIG. 19 to strike the plug 45 into the fastener elements 46, as shown in FIG. 20. As the plug 45 is stricken, the fitting protrusions 62 are released from their concavo-convex engagement with the neck portions 53 and the plug 45 abuts at its distal end against the fitting protrusions 63 and pushes them open, whereby the expanding anchor portions 48 of the fastener elements 46 are expanded to the right and left and their hook portions 64 engage the edge of the hole 66 opening in the rear surface of the counterpart stationary components 65.

When the plug 45 is further pushed, the fitting protrusions 62 on the inner surfaces of the expanding anchor portions 48 make concavo-convex engagement with the uppermost neck portions 52, while the fitting protrusions 63 at the ends of the expanding anchor portions 48 make concavo-convex engagement with the lowermost neck portions 54 of the plug 45, as shown in FIG. 21, whereupon a restraint feel of the concavo- convex engagement is obtained to confirm the expansion of the expanding anchor portions 48 by a predetermined amount. Although the concavo-convex engagement between the fitting protrusions 62 and the uppermost neck portions 52 and the concavo-convex engagement between the fitting protrusions 63 at the ends of the expanding anchor portions 48 and the lowermost neck portions 54 make the expanding anchor portions 48 spring back slightly, the hook portions 64 remain engaged with the open edge of the hole 66, so that the fastener elements 48 and the plug 45 are positioned relative to each other by the above concavo- convex engagements to tighten and fix rigidly the counterpart stationary components 65. When such engagement/coupling is completed, the plug 45 has its distal end project slightly downward from the expanding anchor portions 48.

When the concavo-convex engagement between the fitting protrusions 62 and the uppermost neck portions 52 and the concavo-convex engagement between the fitting protrusions 63 at the ends of the expanding anchor portions 48 and the lower- most neck portions 54 have been completed as described above, the shoulder protrusions 58 are pressed against the underlying rest wall portions 56 and maintain their positions as shown in FIG. 21, so that the counterpart stationary components 65 are tightened and fixed between the hook portions 64 at the ends of the expanding anchor portions 48 and the rest wall portions 56. At the same time, the wedge-like protrusions 49 and the edges of the under-neck protrusions 59 are both pressed against the inner wall surface of the hole 66 to provide a stop for preventing the rotation of the fastener 61. In the event that the above concavo-convex engagements are incomplete, or in the event that any loosening should occur after execution, the head portions 47 are elastically deformed, resulting particularly in the rest wall portions 56 rising from the counterpart stationary components 65, by their self-restoring force, as shown in FIG. 19 or 20, so that the change in shape of the head portions 47 or the rising of the rest wall portions 56 may enable any incomplete engagement or loosening to be recognized or discovered easily.

When, on the other hand, it is desirable to release the engagement/coupling by the fastener 61 after its execution, a striking force is, for example, given to the distal end face of the plug 45 to strike the plug 45 in the opposite direction to that of its execution and thereby release the expanding anchor portions 48 from expansion to return them to their positions shown in FIG. 19. Then, the plug 45, as well as the expanding anchor portions 48, is pulled out from the hole 66.

Thus, this embodiment has the advantage that a single action is sufficient for releasing the fastener 61 from its engagement/coupling, while it is very easy to handle, since the plug 45 and the pair of right and left expanding anchor portions 48 are integrally molded to form a one-piece structure and in no event they are separable from each other.

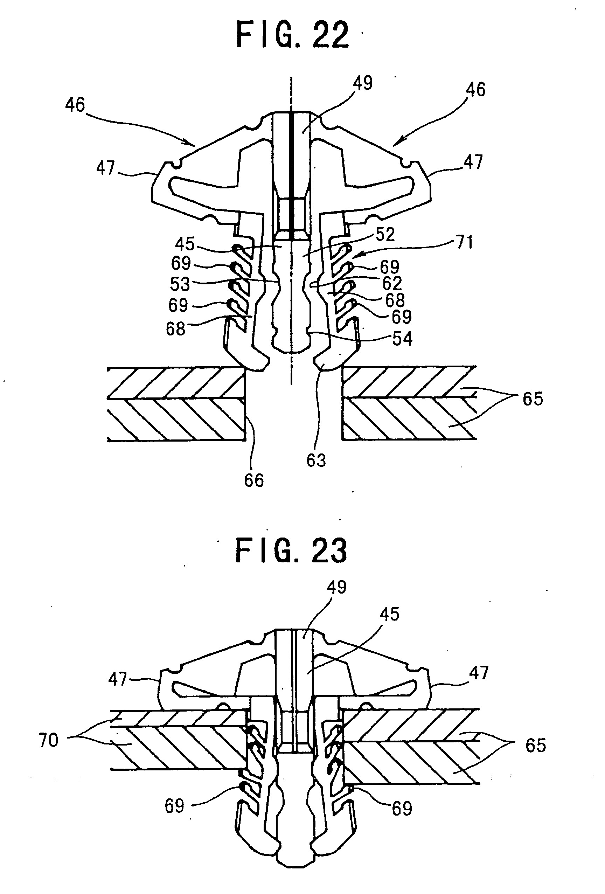

FIGS. 22 and 23 show a seventh embodiment of the present invention while the sixth embodiment described above is based on the premises that the counterpart components to be fixed have a specific thickness, and this embodiment is applicable to counterpart components to be fixed which differ in thickness, too, so that it may be more suitable for general use.

Referring more specifically to FIG. 22 employing common reference numerals for the parts which it shares with the sixth embodiment, it differs from the sixth embodiment in that each of the expanding anchor portions 68 of a pair of right and left fastener elements 46 forming a fastener 71 with a plug 45 has a plurality of latch pawls 69 formed on its outer surface and arranged along its length, while in any other aspect of construction, it is basically identical to the sixth embodiment.

As is obvious from a comparison of the right and left half portions of FIG. 23, therefore, one of the latch pawls 69 is always sure to engage the edge of the hole 66 opening in the rear surface of the counterpart stationary component 65 or 70, even if the counterpart stationary components 65 and 70 may differ in thickness, so that it is possible to fasten and fix the counterpart components 60 and 70 rigidly irrespective of the thickness of the counterpart stationary components 65 and 70.

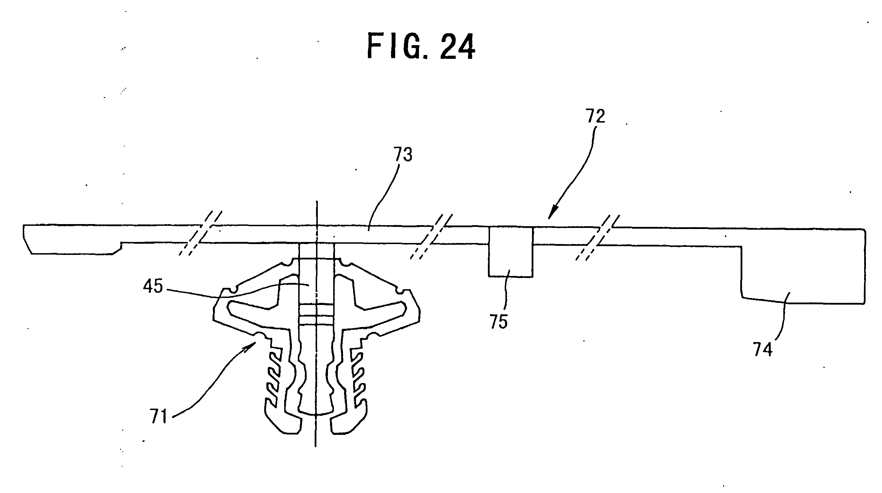

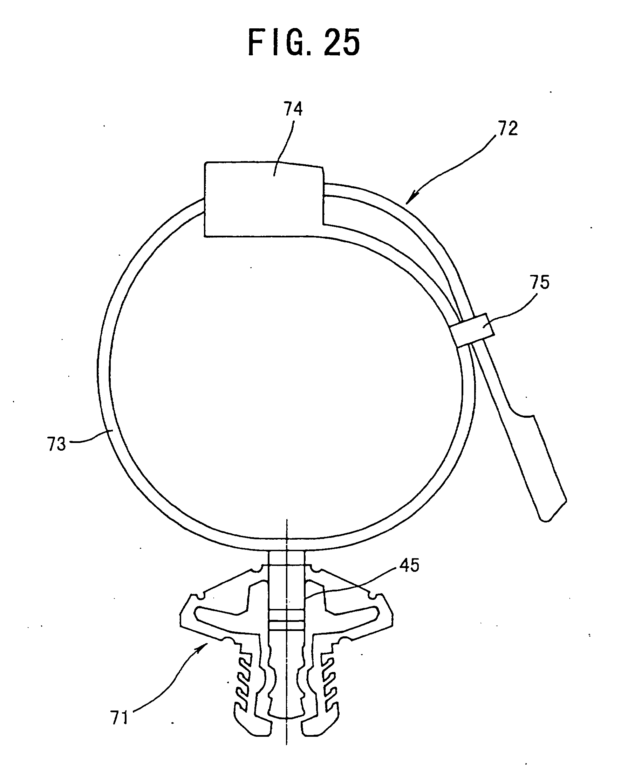

FIGS. 24 and 25 show an eighth embodiment of the present invention, which is an integrally molded combination of a binding band 72 and a fastener 71 according to the seventh embodiment described above and adapted to function as a clip for attaching it (or an anchor portion for attaching it), so that when it is desirable to fix the binding band 72 for binding various kinds of wire, etc. to a wall, etc., such binding and fixing may both be carried out at the same time.

Referring to FIG. 24 employing common reference numerals for the parts which it shares with the seventh embodiment described above, a belt 73 in the binding band 72 has a middle portion molded integrally with a portion corresponding to the head of a plug 45 in a fastener 71. The binding band 72 has an insertion head 74 and a through ring 75 in addition to the belt 73 as shown in FIG. 25, too, and is of the known construction in which when the belt 73 has its end portion inserted through the insertion head 74, the belt 73 is movable only in a tightening direction by the engagement of ratchet surfaces formed on the belt 73 and in the insertion head 74, respectively.

This embodiment has the advantage of allowing both the binding of electric wires, etc. by the binding band 72 and its fixing to a wall, etc. to be done at the same time, while the mode for attaching to the wall, etc. the fastener 71 functioning as a clip for attaching the band may be exactly the same as what is employed by the embodiment described above. A fastener of the type shown in FIG. 13 can, of course, be adopted, too, if required.

## Claims

1. A fastener made of a resin and comprising a sleeve having at its distal end an expanding portion and at another end a seating flange portion, and a plug inserted in the sleeve and having at its distal end a tapered portion for expanding the expanding portion and at another end a head portion, **characterized in that**
in the unexpanded state of the expanding portion, an inner peripheral surface of the sleeve and an outer peripheral surface of the plug are fit with each other by concavo-convex engagement so as to prevent mutual separation of the sleeve and the plug, whereas the plug has a stop stepped portion engaging with a distal end face of the sleeve when being arranged through the sleeve, thereby providing anti-disengagement between the sleeve and the plug, and
that when the expanding portion is expanded by a predetermined amount, while releasing the concavo-convex engagement, in accordance with pressing of the plug to the sleeve after inserting the sleeve into a prepared hole of a counterpart stationary component, the inner peripheral surface of the expanding portion and the outer peripheral surface of the plug are put into concavo-convex engagement again to obtain a restraint feel due to the engagement.

2. The fastener according to claim 1, **characterized in that** the sleeve has a stop stepped portion formed on the outer peripheral surface of the expanding portion and engaging in its expanded state with an opening edge of the prepared hole in a underside of the counterpart stationary component.

3. The fastener according to claim 1 or 2, **characterized in that** the plug is hollow.

4. A fastener comprising a sleeve having an expanding portion, a plug inserted in the sleeve and having a tapered portion for expanding the expanding portion, and a screw member screwed in the plug, wherein at least the sleeve and the plug are formed of a resin, **characterized in that**
the plug also has an expanding portion,
that, in the unexpanded state of the expanding portion, an inner peripheral surface of the sleeve and an outer peripheral surface of the plug are fit with each other by concavo-convex engagement so as to prevent mutual separation of the sleeve and the plug,
that when the expanding portion is expanded by a predetermined amount, while releasing the concavo-convex engagement, in accordance with pressing of the plug to the sleeve after inserting the sleeve into a prepared hole of a counterpart stationary component, the inner peripheral surface of the expanding portion and the outer peripheral surface of the plug are put into concavo-convex engagement again to obtain a restraint feel due to the engagement, and
that when screwing the screw member into the plug, the expanding portion of the plug expands with the expanding portion of the sleeve while maintaining the concavo-convex engagement.

5. The fastener according to claim 4, **characterized in that** when the expanding portion of the sleeve is expanded by a predetermined amount, while releasing the concavo-convex engagement, in accordance with pressing of the plug to the sleeve, a distal end of the expanding portion of the plug protrudes from a distal end of the expanding portion of the sleeve.

6. A resin fastener comprising a plurality of fastener elements each having an expanding anchor portion and a head portion formed integrally with each other and a plug disposed in the middle of an arrangement of the fastener elements and having at its distal end a tapered portion for expanding the expanding anchor portions, wherein the fastener elements and the plug are formed integrally with each other to provide their continuous connection at another end of the plug, **characterized in that**
in the state that the expanding anchor portions are contracted and inserted together with the plug into a prepared hole of a counterpart stationary component, an inner peripheral surface of each expanding anchor portion and an outer peripheral surface of the plug are fit with each other by concavo-convex engagement, and
that when the expanding anchor portions are expanded by a predetermined amount, while releasing the concavo-convex engagement, in accordance with pressing of the plug to the expanding anchor portions, inner peripheral surfaces of the expanding anchor portions and an outer peripheral surface of the plug are put into concavo-convex engagement again, preventing any relative movement between the two and obtaining a restraint feel due to the concavo-convex engagement.

7. The fastener according to claim 6, **characterized in that** each expanding anchor portion has a stop stepped portion formed at its distal end and engaging in its expanded state with an opening edge of the prepared hole in a underside of a counterpart stationary component.

8. The fastener according to claim 6, **characterized in that** each expanding anchor portion has a plurality of latch pawls formed along the axial direction of the prepared hole, wherein, in the expanded state of the expanding anchor portion, one of the latch pawls of each expanding anchor portion engages with an opening edge of the prepared hole in a underside of a counterpart stationary component.

9. The fastener according to any of claims 6 to 8, **characterized in that** when the inner peripheral surfaces of the expanding anchor portions and the outer peripheral surface of the plug are put into concavo-convex engagement again in accordance with expansion of the expanding anchor portions, a distal end of the plug protrudes from distal ends of the expanding anchor portions.

10. The fastener according to any of claims 6 to 9, **characterized in that** the fastener elements of small width are disposed to be opposite to each other across the plug when viewed in top plan.

11. The fastener according to any of claims 6 to 10, **characterized in that** the plug has the other end with which a binding belt is formed integrally.
